Europäisches Patentamt

European Patent Office

Office européen des brevets

(11) Numéro de publication: **0 440 538 B1**

(12) **FASCICULE DE BREVET EUROPEEN**

(45) Date de publication de fascicule du brevet: **26.10.94**  (51) Int. Cl.5: **C11B 3/02**, A23L 1/015, C08B 37/00

(21) Numéro de dépôt: **91400184.7**

(22) Date de dépôt: **28.01.91**

(54) **Procédé de raffinage de mélanges issus de traitements de milieux gras à l'aide de cyclodextrine et comprenant des complexes de cyclodextrine essentiellement avec des substances lipophiles autres que les acides gras.**

(30) Priorité: **29.01.90 FR 9001007**

(43) Date de publication de la demande:
**07.08.91 Bulletin  91/32**

(45) Mention de la délivrance du brevet:
**26.10.94 Bulletin  94/43**

(84) Etats contractants désignés:
**AT BE CH DE DK ES FR GB GR IT LI NL SE**

(56) Documents cités:
**EP-A- 0 326 469**
**US-A- 3 491 132**

**DIE STÄRKE, vol. 27, no. 11, novembre 1975, pages 368-376; S. SZEJTLI et al.:"Inclusion complexes of unsaturated fatty acids with amylose and cyclodextrin"**

**JOURNAL OF FOOD SCIENCE, vol. 51, no. 4, 1986, pages 1024-1027; L. SZENTE etal.: "Molecular encapsulation of natural and synthetic coffee flavor with beta-cyclodextrin"**

(73) Titulaire: **Roquette Frères**

**F-62136 Lestrem (FR)**

(72) Inventeur: **Mentink, Léon**
**96, rue du Collège**
**F-59940 Estaires (FR)**
Inventeur: **Serpelloni, Michel**
**155, Route Nationale**
**F-62660 Beuvry Les Bethune (FR)**

(74) Mandataire: **Boulinguiez, Didier et al**
**Cabinet Plasseraud**
**84, rue d'Amsterdam**
**F-75009 Paris (FR)**

**Description**

L'invention a pour objet un procédé de raffinage de mélanges issus de traitements de milieux gras à l'aide de cyclodextrine et comprenant des complexes de cyclodextrine avec des substances lipophiles autres que les acides gras.

Par l'expression "milieu gras", on désigne toute substance contenant des matières grasses, à savoir:

- d'une part, les substances biologiques d'origine
    - animale, comme les matières grasses du groupe comprenant le suif, le saindoux, le beurre concentré, les huiles de poissons, la graisse de laine, le sang, les matériaux céphalorachidiens, l'oeuf, le lait et leurs dérivés,
    - végétale, comme les huiles végétales, les colophanes, les condensats de désodorisation, les milieux contenant des composés d'arôme tels que les huiles essentielles ou les oléorésines, les substances odorantes,
    - fossile, comme par exemple les huiles minérales, et
- d'autre part, les substances synthétiques, comme les arômes artificiels.

Les cyclodextrines sont des molécules cycliques de polyanhydroglucose de conformation tubulaire tronconique. Selon qu'elles sont constituées de 6, 7 ou 8 motifs anhydroglucose, elles sont dénommées respectivement alpha-, bêta- ou gamma-cyclodextrine.

Dans un souci de simplification, on utilise ci-après le terme général "cyclodextrine" pour désigner l'une quelconque des cyclodextrines alpha, bêta ou gamma, un mélange de celles-ci, ou bien encore des dérivés de cyclodextrine.

La cyclodextrine est préparée par traitement d'amidon liquéfié avec une enzyme, la cyclodextrine glycosyltransférase (C.G.T.).

Du fait de sa structure torique particulière délimitant une cavité hydrophobe, la cyclodextrine a pour propriété de capter sélectivement, dans sa cavité hydrophobe, diverses espèces moléculaires et groupements réactionnels appartenant essentiellement à des substances lipophiles. L'affinité de ces substances lipophiles vis-à-vis de la cyclodextrine (constante d'association) dépend de leur nature et de leur configuration chimique ainsi que de leur taille prise relativement par rapport à celle de la cavité de la cyclodextrine, dépendant elle-même du nombre de résidus de glucose.

Cette capacité naturelle complexante de la cyclodextrine commence à être mise à profit, notamment dans les secteurs de l'industrie alimentaire, de la pharmaco-cosmétologie ou de l'industrie en général.

Il a ainsi été envisagé d'utiliser la cyclodextrine dans des procédés d'une part d'élimination et de séparation de composés indésirables, d'autre part de récupération de composés à haute valeur ajoutée à partir de milieux gras biologiques.

Parmi ces procédés, on peut citer l'extraction de stéroïdes - notamment de cholestérol - de matières grasses ou de substances biologiques comme ceux décrits dans les demandes de brevet français n° 2.601.959 et 2.626.145.

On connaît également des procédés visant à extraire sélectivement des composés d'arômes présents dans des huiles essentielles ou à éliminer des composés de dégradation nuisibles au pouvoir aromatique de celles-ci (L. Szente "Cyclodextrin Workshop", Gand, 1989, Part 2, pages 5-6).

Ainsi, le brevet US n° 3.491.132 décrit un procédé visant à réduire la teneur en acides gras libres d'huiles glycéridiques à l'aide de $\beta$-cyclodextrine.

Dans ces procédés, la cyclodextrine est mise en contact, en présence d'eau, avec le milieu gras biologique contenant les composés lipophiles à extraire, la cyclodextrine étant incorporée en quantité suffisante pour former des complexes avec ces derniers. Une fois formés, les complexes se retrouvent dans la phase aqueuse qui est séparée de la phase grasse.

A l'échelle industrielle, ces résidus aqueux qui contiennent les composés à éliminer ou à purifier sont des produits d'extraction générés en très grande quantité. A titre d'exemple, on peut se référer au procédé d'extraction du cholestérol de matières grasses décrit dans la demande de brevet français n° 2.601.959 dont la mise en oeuvre conduit à la formation d'environ 10% en poids de produit d'extraction par rapport à la matière grasse traitée en tête de procédé.

La Société Demanderesse s'est préoccupée du problème de la valorisation de ces mélanges résiduels obtenus à l'issue des procédés d'extraction.

Il serait en effet particulièrement intéressant, pour les industriels mettant en oeuvre lesdits procédés ou utilisant comme matière première ces composés lipophiles, de pouvoir fractionner ces mélanges résiduels de manière à récupérer sous forme sensiblement pure chacun de leurs constituants avantageux. Cela concerne en particulier la cyclodextrine, qui pourrait ainsi être réutilisée dans les procédés d'extraction de façon à diminuer leurs coûts de revient, mais aussi certaines des substances lipophiles présentes dans les

2

mélanges, qu'elles soient ou non incluses dans la cavité interne de la cyclodextrine. Il peut s'agir de substances lipidiques recyclables, de stéroïdes, de vitamines, de composés d'arômes ou d'autres composés susceptibles d'être revalorisés.

Il s'est donc agi de résoudre le difficile problème du fractionnement, de la séparation et de la récupération sous une forme pure des divers constituants d'un mélange qui se présente comme un milieu hétérogène complexe, la difficulté étant encore augmentée du fait de l'affinité extrêmement grande qu'ont certaines substances lipophiles pour la cyclodextrine.

Et ce n'est pas le procédé décrit dans la demande de brevet français n° 2.513.656 qui permet de résoudre ce problème de manière satisfaisante. Le brevet en question décrit une méthode de dissociation de complexes cyclodextrine avec des composés lipophiles autres que les acides gras, notamment du type stéroïdes, mise en oeuvre suite à l'utilisation de $\beta$-cyclodextrine dans les procédés de conversion microbiologique de stéroïdes. Cette $\beta$-cyclodextrine est destinée à solubiliser les stéroïdes dans l'eau, milieu particulièrement adapté à ce type de réaction. La $\beta$-cyclodextrine peut être récupérée du milieu aqueux de la bioconversion par extraction des stéroïdes avec un solvant organique tel que le diisopropyléther puis par précipitation de la cyclodextrine libre au moyen d'un solvant tel que le cyclohexane, le trichloréthylène ou le toluène, apte à diminuer sa solubilité par formation d'un complexe. La $\beta$-cyclodextrine sous forme solide est ensuite isolée par filtration. Avant de pouvoir être réutilisée, cette $\beta$-cyclodextrine devra être soumise à un traitement de purification coûteux visant à éliminer le solvant. Si l'on souhaitait appliquer cette méthode dans le domaine alimentaire, il serait nécessaire d'éliminer toute trace de solvants en raison de leur non alimentarité, d'où un coût encore plus important. Par ailleurs, le recours à des solvants impose le respect de règles de sécurité contraignantes entraînant des investissements conséquents et onéreux. La technique de récupération mise en oeuvre est complexe et ne répond pas aux impératifs industriels de rentabilité économique. En outre, il ne permet pas de décomplexer et d'extraire une grande variété de composés lipophiles.

Finalement, ce procédé de récupération est tout à fait spécifique aux traitements de bioconversion de stéroïdes et ne pouvait pas être généralisé à d'autres applications.

Pour mémoire, on peut citer également le brevet US n° 3.491.132 mentionné ci-dessus, bien qu'il soit sans rapport avec la présente invention, compte tenu du fait qu'il s'applique aux acides gras, qui représentent un groupe différencié de composés lipophiles. Ce brevet propose un procédé de décomplexation consistant à diluer à l'eau la phase aqueuse contenant les complexes et à porter l'ensemble à ébullition. Les liaisons entre la $\beta$-cyclodextrine et les acides gras se rompent et ces derniers peuvent être récupérés dans le surnageant.

La $\beta$-cyclodextrine demeure dans la phase aqueuse et peut être recueillie sous forme solide après refroidissement.

Un tel procédé ne permet de récupérer qu'une faible proportion des acides gras présents dans le mélange initial contenant les complexes.

La $\beta$-cyclodextrine est donc imparfaitement purifiée et sera difficilement recyclable car elle est susceptible de polluer la matière grasse dans laquelle elle pourrait être introduite.

En outre, les rendements de purification obtenus par mise en oeuvre de ce procédé de décomplexation sont si faibles qu'ils le privent de tout intérêt industriel.

Enfin et surtout, les complexes traités sont des complexes cyclodextrine/acides gras qui possèdent des caractéristiques physico-chimiques propres et différentes de celles de complexes de cyclodextrine avec d'autres composés lipophiles. Il en résulte que le procédé de décomplexation divulgué dans ce brevet est tout à fait spécifique aux acides gras et ne peut en aucun cas être transposable aux autres composés lipophiles.

Or, il est du mérite de la Société Demanderesse d'avoir trouvé qu'il était possible de séparer et de purifier avec un haut rendement les différents constituants d'un mélange obtenu après traitement d'un milieu gras au moyen de cyclodextrine, en traitant ledit mélange par la chaleur en présence d'eau.

Il s'ensuit que le procédé de raffinage conforme à l'invention est caractérisé par le fait qu'un mélange issu du traitement de milieux gras à l'aide de cyclodextrine et comprenant des complexes de cyclodextrine avec essentiellement des substances lipophiles autres que les acides gras est soumis à un traitement thermique en présence d'un système solvant comprenant de l'eau, le mélange ainsi traité étant séparé en différents raffinats qui sont récupérés. Le terme "raffinats" désigne les différentes fractions de constituants du mélange obtenus après raffinage.

Le susdit traitement thermique en milieu aqueux a pour effet, d'une part, de provoquer au moins partiellement la dissociation des complexes "cyclodextrine/composés inclus" et, d'autre part, de libérer de leur liaison avec la cyclodextrine les composés lipophiles non inclus.

EP 0 440 538 B1

Toutes ces substances étant libres, elles se séparent aisément de la cyclodextrine qui peut alors être récupérée puis réutilisée.

Le procédé conforme à l'invention permet d'obtenir sous forme libre la majeure partie de la cyclodextrine initialement présente dans le mélange. Cette cyclodextrine est susceptible d'être directement réutilisée en amont dans le traitement de milieux biologiques à l'aide de cyclodextrine, traitement qui devient alors plus économique.

Ce procédé permet également de récupérer de manière fractionnée ou non toutes les substances lipophiles de départ, y compris les stéroïdes le cas échéant.

Ces substances grasses peuvent être valorisées en étant employées comme matières premières dans la fabrication de produits alimentaires, cosmétiques, pharmaceutiques ou autres. Il est également possible de faire subir à ces matières grasses des traitements de purification tels que la saponification de façon à récupérer les produits insaponifiables, dont les stéroïdes, qui constituent des composés à haute valeur ajoutée.

Les proportions respectives en mélange sec de départ à traiter et en système solvant varient de 0,02:1 à 4:1 parties en poids, et de préférence de 0,10:1 à 1:1 parties en poids.

Il est avantageux de procéder à une agitation au moins préalablement au traitement thermique, voire pendant toute sa durée, de manière à homogénéiser le mélange avec le système solvant.

Des homogénéisateurs à piston du type ALMO ou à hélice du type ULTRATURAX, ou tout autre système approprié, connu en soi, peuvent être utilisés pour modifier les caractéristiques physiques du mélange de manière à optimiser son raffinage.

Conformément à l'invention, le traitement thermique est effectué à une température comprise entre 30 et 200°C.

La durée de ce traitement est de quelques secondes à quelques minutes, de préférence comprise entre 1 et 10 minutes et, plus préférentiellement encore, voisine de 5 minutes.

Dans le cas où les substances incluses sont essentiellement des stéroïdes ou des composés d'arômes, la température de traitement thermique est comprise entre 100 et 150°C, de préférence entre 110 et 140°C, et plus préférentiellement encore voisine de 120°C.

Conformément à une variante de mise en oeuvre de l'invention, le traitement thermique comprend au moins deux étapes.

Dans une première étape, on soumet le mélange à un premier traitement thermique à une température $T_1$ comprise entre 30 et 100°C en présence du système solvant, puis on sépare du mélange de départ les composés lipophiles les plus faiblement liés à la cyclodextrine et qui se trouvent libérés.

La deuxième étape consiste à soumettre le mélange résiduel à un second traitement thermique à une température $T_2$ comprise entre 100 et 200°C toujours en présence du système solvant, puis à séparer les composés lipophiles restants, alors libérés, du mélange résiduel.

Cette variante est avantageuse car elle permet de récupérer et de valoriser séparément les différentes phases lipophiles.

C'est ainsi que les composés lipophiles les plus faiblement liés à la cyclodextrine et présentant une composition proche de celle du milieu de départ sur lequel sont appliqués les procédés d'extraction à l'aide de cyclodextrine, peuvent être éventuellement réincorporés dans ledit milieu de départ.

Dans la mesure où les substances incluses issues du traitement à l'aide de cyclodextrine sont essentiellement des stéroïdes ou des composés d'arômes, il est préférable d'effectuer la seconde étape à une température $T_2$ comprise entre 100° et 150°C, de préférence entre 100 et 140°C et plus préférentiellement voisine de 120°C.

Selon un mode de réalisation avantageux du procédé conforme à l'invention, le traitement thermique est effectué en présence d'un système solvant constitué exclusivement d'eau.

Selon un autre mode de réalisation avantageux du procédé conforme à l'invention, tout ou partie du traitement thermique est effectué en présence d'au moins un produit propre à améliorer les propriétés décomplexantes du système solvant et/ou à faciliter la séparation des raffinats.

Avantageusement, ce produit est choisi dans le groupe des sucres, des polyols ou des alcools.

On utilise de préférence un polyol tel que le glycérol, le xylitol ou le sorbitol, le glycérol étant préféré.

On a pu constater que le glycérol permet en effet d'améliorer de façon notable l'extraction des composés lipophiles et leur séparation de la phase aqueuse.

Le rapport eau/glycérol est de préférence compris entre 3:1 et 1:2 parties en poids et, plus préférentiellement encore, voisin de 1:1 parties en poids.

Le pH du milieu peut être ajusté de façon à optimiser la décomplexation et à augmenter les rendements de récupération en raffinats.

4

EP 0 440 538 B1

Après mise en oeuvre du traitement de séparation subséquent au traitement thermique et qui peut être par exemple du type décantation ou centrifugation, le procédé conforme à l'invention conduit à la formation, à chaud, d'au moins deux phases. La première de nature grasse et de densité inférieure à celle du système solvant constitue la phase surnageante. La seconde est formée par le système solvant (eau seule ou eau/produit) et contient la cyclodextrine.

Eventuellement, on peut observer une troisième phase constituée par le résidu non traité du mélange initial.

Il est à noter que la phase grasse, si elle n'est pas homogénéisée, peut elle-même présenter plusieurs phases, compte tenu des substances grasses de différentes natures qu'elle comprend.

Pour recueillir la cyclodextrine sous forme solide, il convient de prélever la phase solvant qui la contient et de la refroidir à une température suffisamment basse, par exemple d'environ 4°C.

Les eaux-mères résiduelles peuvent être recylées, notamment en tête du procédé selon l'invention.

Il est également possible de procéder à l'évaporation du système solvant pour récupérer la cyclodextrine avec un meilleur rendement.

Dans le cas où le système solvant est constitué uniquement d'eau, la cyclodextrine en solution peut être utilisée directement telle quelle. Le résidu non traité peut être recyclé.

Dans le cas où les substances incluses sont majoritairement des stéroïdes et où le système solvant est l'eau seule, lesdites substances peuvent se retrouver, après retour à température ambiante, dans une deuxième phase grasse.

L'utilisation d'un produit du type alcool comme l'éthanol permet, d'une part, d'effectuer le traitement thermique à plus basse température avec un rendement d'extraction identique à celui obtenu avec un système solvant constitué uniquement d'eau, et permet, d'autre part, d'augmenter le rendement de récupération de la cyclodextrine par diminution de sa solubilité à froid.

Pour une concentration élevée en alcool, on observe qu'une partie des composés lipophiles est dissoute dans la phase hydroalcoolique.

Le procédé conforme à l'invention peut être mis en oeuvre suivant un mode de fonctionnement statique ou dynamique.

Dans ces deux modes de fonctionnement, il est fait appel à des appareillages aptes à produire des pressions élevées afin de pouvoir atteindre les hautes températures requises dans le procédé.

Le mode de fonctionnement statique consiste à traiter un volume déterminé de mélange de départ, en présence du système solvant, en le portant à une température adaptée à la nature des composés lipophiles majoritaires, à l'aide d'un dispositif de chauffage par exemple du type autoclave ou cuiseur à vapeur, puis à séparer les différents raffinats obtenus par décantation ou par centrifugation.

Le dispositif du type autoclave apparaît comme étant particulièrement adapté pour travailler selon le mode statique.

Le mode de fonctionnement statique est particulièrement adapté lorsque
- les quantités de mélange à raffiner sont faibles,
- le mélange à raffiner et/ou le système solvant employé contiennent des substances particulièrement volatiles, comme par exemple les composés d'arômes, les alcools ou le glycérol,
- l'on utilise les caractéristiques du système solvant non seulement pour extraire mais aussi pour fractionner les substances lipophiles en une partie solubilisée dans le système solvant et une autre partie insoluble.

Dans le cas du mode de fonctionnement dynamique, le mélange de départ est mis en circulation dans un dispositif de chauffage après avoir été homogénéisé avec le système solvant. Après ce traitement thermique, le mélange est amené vers des moyens de séparation des différentes phases.

Ces derniers peuvent notamment être constitués par un dispositif du type décanteuse centrifugeuse, de préférence autodébourbeuse à fonctionnement en continu.

Selon un mode de réalisation avantageux, on a recours, en fonctionnement dynamique, à un dispositif de cuisson par injection de vapeur ou convertisseur thermochimique, appelé communément "jet cooker". Un tel dispositif est traditionnellement utilisé pour la cuisson d'amidon dans l'industrie du papier/carton.

A titre d'exemple, on peut citer le cuiseur commercialisé par la Société Demanderesse sous la dénomination cuiseur HI-CAT.

Le principe de ce dispositif est d'injecter de la vapeur d'eau dans un serpentin de cuisson à l'intérieur duquel circule le fluide qui doit être traité par la chaleur et qui, en général, est du lait d'amidon.

La vapeur d'eau est injectée de façon concourante au fluide. Elle détermine la pression à l'intérieur du circuit; cette pression peut être régulée à l'aide d'une vanne de contre-pression disposée au voisinage de l'extrémité de sortie dudit circuit.

La durée du traitement thermique est dépendante du volume du serpentin de cuisson et du débit du fluide.

A la sortie du serpentin, après détente dans un cyclone et évacuation de la vapeur, on récupère le fluide cuit.

Dans le cadre de son application au procédé conforme à l'invention, le jet-cooker est équipé d'au moins une cuve de préparation dans laquelle le mélange de départ est homogénéisé avec le système solvant. Avantageusement, il comprend également, reliés à l'extrémité de sortie du serpentin, des moyens de séparation tels que ceux cités plus haut, à savoir une centrifugeuse autodédébourbeuse à fonctionnement en continu du type de celle commercialisée par la Société WESTFALIA.

Il est ainsi possible de recueillir à la sortie de la centrifugeuse les différents raffinats, à savoir : une fraction donnée de composés lipophiles, le système solvant contenant la cyclodextrine et le résidu non traité qui peut être acheminé directement dans la cuve de préparation pour être recyclé.

Suivant un autre mode de réalisation avantageux, le fonctionnement dynamique peut être mis en oeuvre à l'aide d'un échangeur thermique, par exemple à plaques, tel que celui commercialisé par la Société ALFA LAVAL sous la marque déposée ALFA-FLEX, à faisceau tubulaire, ou bien encore à surface raclée.

D'une manière comparable à l'utilisation du jet-cooker, on dispose à l'entrée de l'échangeur au moins une cuve de préparation de l'homogénéisat constitué par le mélange de départ et le système solvant; la sortie de l'échangeur est connectée à des moyens de séparation en continu similaires à ceux décrits ci-dessus.

Suivant une variante du mode de fonctionnement dynamique, le traitement thermique est un traitement d'entraînement à la vapeur consistant à faire circuler de la vapeur au travers du mélange à raffiner homogénéisé au système solvant, de manière à extraire les composés lipophiles dudit mélange. Pour optimiser ce traitement, notamment lorsqu'il s'agit de substances volatiles telles que les composés d'arômes, il est préférable de réaliser l'extraction sous vide et de faire circuler à contre-courant le mélange homogénéisé au système solvant et la vapeur.

Ce type de procédé d'entraînement à la vapeur ainsi que les dispositifs appropriés pour sa mise en oeuvre sont connus en eux-mêmes et sont largement employés pour la désodorisation de matières grasses animales ou végétales.

Conformément à l'invention, il peut être avantageux de combiner une ou plusieurs des variantes de ce mode de fonctionnement dynamique.

Les moyens de mise en oeuvre de l'invention décrits ci-dessus ne sont pas limitatifs mais sont relatifs à des moyens de réalisation avantageux. Tout autre dispositif propre à chauffer dans une large gamme de température le mélange de départ, en présence d'un système solvant comprenant de l'eau, de manière statique ou dynamique, est susceptible de convenir pour la mise en oeuvre du procédé suivant l'invention.

De toute façon, ce dernier pourra être bien compris et ses avantages ressortiront clairement à l'aide des exemples de mise en oeuvre qui suivent.

## EXEMPLE 1

1. Préparation d'un décantat destiné à être traité par le procédé selon l'invention.

Le procédé d'extraction du cholestérol décrit dans l'exemple 1 de la demande de brevet français n° 2.601.959 est appliqué au traitement de 100 kg de beurre concentré. Pour cela, 5 kg de $\beta$-cyclodextrine (commercialisée par la Société Demanderesse) sont employés en solution dans 100 kg d'eau tiède.

Après mélange à 40°C et agitation à cette température pendant 5 heures, sous ambiance non oxydante, la phase grasse appauvrie en cholestérol se sépare de la phase aqueuse. Cette dernière se clarifie lentement pour donner naissance à un décantat présentant une matière sèche voisine de 65% et composée à 80% de $\beta$-cyclodextrine et à 20% environ de matières grasses.

Environ la moitié de la matière grasse totale contenue dans le décantat se présente sous forme faiblement liée à la $\beta$-cyclodextrine.

2. Raffinage du décantat conformément à l'invention.

Selon le procédé conforme à l'invention, 1,8 kg de décantat obtenu comme décrit ci-dessus sont dispersés dans l'eau froide pour former un lait, puis traités au moyen d'un cuiseur thermochimique du type de celui commercialisé par la Demanderesse sous la dénomination de cuiseur HI-CAT avec injection directe de vapeur. Les températures dans les serpentins sont ajustées par les débits de vapeur. Les temps de passage du mélange dans le cuiseur sont de l'ordre de 5 minutes.

6

En sortie du cuiseur, le mélange traité thermiquement est séparé en continu en trois phases par l'utilisation d'une centrifugeuse à assiettes du type de celle commercialisée par la Société WESTFALIA.

La phase la plus légère est constituée de matières grasses. La phase lourde sous forme de culot correspond au décantat non traité. La troisième phase de densité intermédiaire est une phase aqueuse contenant la $\beta$-cyclodextrine en solution. Cette dernière peut être utilisée directement pour le traitement d'une nouvelle quantité de beurre ou bien être refroidie lentement jusqu'à 4°C, de manière à obtenir des cristaux de $\beta$-cyclodextrine séparables par simple filtration.

Les résultats obtenus lors du traitement du décantat à différentes températures sont portés dans le tableau I ci-après :

## TABLEAU I

| Quantités d'eau de dispersion utilisées pour traiter 1,80 kg de décantat sec | Température de traitement | Quantités de β-cyclodextrine (en kg) | | Quantités de matières grasses recueillies (en kg) | Quantités de décantat intraité recueillies (en kg) |
| --- | --- | --- | --- | --- | --- |
| | | recueillies à 4°C | solubles et non recueillies à 4°C | | |
| 5,00 | 105°C | 0,01 | 0,07 | 0,09 | 1,60 |
| 5,00 | 120°C | 0,75 | 0,09 | 0,18 | 0,78 |
| 5,00 | 120°C | 0,85 | 0,09 | 0,23 | 0,60 |
| 5,00 | 150°C | 0,10 | 0,09 | 0,01 | 1,58 |
| 2,00 | 150°C | 0,00 | 0,04 | 0,00 | 1,73 |

Une température de traitement voisine de 120°C conduit à une bonne séparation des matières grasses et de la β-cyclodextrine présentes dans le décantat.

Une analyse qualitative par chromatographie sur couche mince des matières grasses recueillies permet de constater que les compositions de celles-ci varient avec la température de traitement.

Pour une température de 105°C, la matière grasse recueillie est très riche en triglycérides et pauvre en cholestérol. Au contraire, un traitement à 120°C conduit à l'obtention d'une phase grasse présentant

8

sensiblement la même composition que la matière grasse totale du décantat de départ, soit environ 24% de cholestérol.

## EXEMPLE 2

Le décantat décrit dans l'exemple 1 est utilisé dans cet exemple à raison de 1,8 kg sec pour 5 litres d'eau. Le mélange laiteux obtenu est chauffé à 95°C par passage sur un échangeur à plaques. En sortie, le mélange est centrifugé pour être séparé en trois phases : une phase grasse, une phase aqueuse et un culot.

La phase grasse recueillie représente 48% de la matière grasse totale contenue initialement dans le décantat. Une analyse chromatographique en phase gazeuse de celle-ci permet de constater qu'elle contient seulement 1,5% de cholestérol. Le reste est constitué de triglycérides (94%), d'acides gras (2%) et d'eau (2%).

Cette matière grasse ne présente pas un indice de peroxyde élevé et peut alors éventuellement être réincorporée au beurre concentré avant traitement d'extraction du cholestérol comme décrit dans la demande de brevet français n° 2.601.959. Cette solution permet d'augmenter le rendement en beurre.

La phase aqueuse et le culot sont mélangés par agitation. Le lait obtenu est traité à 120°C selon le principe décrit dans l'exemple 1. Trois phases sont obtenues après centrifugation : une phase grasse, une phase aqueuse et un culot.

Cette nouvelle phase grasse représente 40% de la matière grasse initialement présente dans le décantat. Elle contient 36% de cholestérol, le reste étant constitué principalement par des acides gras libres. Les composés mineurs identifiés sont des triglycérides, de l'eau et de la $\beta$-cyclodextrine. La richesse en cholestérol rend cette nouvelle phase grasse intéressante comme matière première pour la production de cholestérol pur ou de dérivés de cholestérol comme la vitamine D.

La solution aqueuse contenant la $\beta$-cyclodextrine à l'état soluble peut être utilisée à nouveau dans le traitement du beurre concentré. Elle peut être aussi refroidie pour obtenir des cristaux de $\beta$-cyclodextrine.

Le culot obtenu, selon l'invention, par double traitement thermique, présente une composition très voisine du décantat de départ.

Ne représentant pas plus de 15 % du poids sec initial, il peut être réincorporé à une nouvelle quantité de décantat pour être traité à nouveau selon le procédé de l'invention.

## EXEMPLE 3

Le décantat décrit dans l'exemple 1 est utilisé dans cet exemple à raison de 100 g sec.

Cette quantité de matière est introduite dans 7 pots de verre "twist-off" stérilisables.

La nature des solvants utilisés ainsi que les quantités solvantes sont données dans le tableau II. Les pourcentages de glycérol présent dans les systèmes solvant sont exprimés en poids.

Dans chaque cas, le décantat est mélangé au système solvant choisi, par agitation mécanique lente pendant 10 minutes.

Les mélanges, se présentant sous forme de laits blancs, sont autoclavés à 120°C pendant 5 minutes, puis refroidis à 70°C et centrifugés à chaud à 300 tours-minute.

On sépare les phases grasses surnageantes. Celles-ci sont ensuite séchées par étuvage à 40°C pendant 72 heures.

Les rendements d'extraction des matières grasses pour chaque essai sont calculés. Ces valeurs sont données dans le tableau II.

On remarque que l'extraction de celles-ci est meilleure lorsque le système solvant contient du glycérol. De plus, la quantité de cholestérol présent dans ces matières grasses augmente avec la quantité de glycérol présent dans le système solvant.

## TABLEAU II

| Solvants utilisés | Quantités (en kg) de solvant utilisé pour traiter 100 g de décantat sec | Rendement d'extrac-tion des matières grasses* (en %) | Richesse en cholestérol des matières grasses recueillies (en %) |
|---|---|---|---|
| eau | 0,62 | 73 | 15 |
| eau | 0,72 | 22 | 7 |
| eau | 1,45 | 29 | 8 |
| eau-glycérol (70% - 30%) | 0,72 | 70 | 13 |
| eau-glycérol (50% - 50%) | 0,62 | 95 | 24 |
| eau-glycérol (50% - 50%) | 0,72 | 81 | 16 |
| eau-glycérol (50% - 50%) | 1,45 | 76 | 15 |

* (matières grasses recueillies sur matières grasses totales du décantat).

### EXEMPLE 4

1). Préparation d'un culot destiné à être traité par le procédé suivant l'invention.

Un condensat de désodorisation d'une huile de tournesol est traité à l'aide de $\beta$-cyclodextrine (commercialisée sous la marque déposée KLEPTOSE par la Société Demanderesse) de manière à extraire les phytostérols qu'il contient. La composition de ce co-produit issu du raffinage d'une huile de tournesol est donnée dans le tableau III ci-dessous.

On réalise sur ce condensat une double extraction en procédant comme suit:
- de la $\beta$-cyclodextrine KLEPTOSE et de l'eau à 20°C sont ajoutés au condensat. Le tout est homogénéisé pendant 5 minutes avec un matériel de type ULTRATURAX de manière à obtenir une émulsion visqueuse et homogène. Celle-ci est ensuite diluée avec de l'eau avant d'être centrifugée à 3000 tours/minute et à température ambiante. On sépare ainsi un premier culot de centrifugation, une phase grasse et une phase aqueuse intermédiaire. Cette dernière est éliminée. Les deux autres phases sont conservées.
- de la $\beta$-cyclodextrine KLEPTOSE et de l'eau à 20°C sont ajoutés à la phase grasse surnageante obtenue comme décrit ci-dessus afin de réaliser une seconde extraction. On procède de manière identique afin d'obtenir un second culot de centrifugation et une phase grasse ayant subi une double extraction. Cette dernière est séchée en étuve à 40°C pendant 48 heures.

Les culots de centrifugation sont réunis puis séchés en étuve à 40°C pendant 8 heures.

La composition de ce culot total est donnée dans le tableau III ci-dessous. Il représente 297 g.

## TABLEAU III

| | Composition du condensat de désodori- sation utilisé (%) | Composition de la phase grasse surnageante (%) | Composition du culot total séché (%) |
|---|---|---|---|
| Mat. grasses totales | 86,0 | 94,0 | 6,5 |
| dont | | | |
| – acides gras libres et triglycérides | 82,0 | 82,5 | 61,0 |
| – phytostérols (β sitostérol + stigmastérol) | 13,4 | 12,8 | 39,0 |
| – tocophérols (α + β) | 4,6 | 4,7 | traces |
| β-cyclodextrine | – | | 88,0 |
| Autres | | | |
| (eau, glycérine, pigments) | 14,0 | 6,0 | 4,5 |

La β-cyclodextrine, par inclusion sélective, a permis une extraction des phytostérols. La phase grasse traitée s'est enrichie en tocophérols, en acides gras libres et en triglycérides.

### 2). Raffinage du culot conformément à l'invention

Selon le procédé conforme à l'invention, 30 g du culot total obtenu comme décrit ci-dessus, sont placés dans un pot de verre "twist-off" stérilisable.

60 g de glycérol bidistillé et 150 ml d'eau sont ajoutés au culot et mélangés à celui-ci par agitation mécanique de façon à obtenir un lait homogène.

L'ensemble est autoclavé à 120°C pendant 5 minutes, puis refroidi à une température de 70°C avant d'être centrifugé. On recueille ainsi trois fractions: une phase surnageante de nature grasse, une phase aqueuse et un résidu blanc plus dense.

La fraction grasse est séchée en étuve à 40°C pendant 48 heures. Elle représente 1,45 g, soit 74% de la matière grasse initialement présente dans le culot.

Après analyses par chromatographie sur couche mince et chromatographie en phase gazeuse, on constate que la matière grasse extraite contient 58% de phytostérols, soit un taux très proche de celui obtenu lors de l'analyse de la matière grasse contenue dans le culot total avant traitement.

### EXEMPLE 5

1. Préparation d'une poudre aromatique destinée à être traitée par le procédé suivant l'invention.

Une huile essentielle de menthe poivrée est traitée au moyen de β-cyclodextrine (commercialisée par la Société Demanderesse sous la marque KLEPTOSE) afin d'obtenir un isolat aromatique riche en menthol.

Pour cela, de la β-cyclodextrine KLEPTOSE est mélangée à de l'eau distillée. On obtient ainsi une pâte blanche visqueuse à laquelle est ajoutée lentement, sous agitation mécanique, l'huile essentielle.

L'ensemble est ensuite homogénéisé à 13500 tours/minute en utilisant un appareil de type UNIMIX. On obtient alors une pâte en suspension dans le milieu huileux.

Cette pâte est séparée de l'huile en excès par filtration sous vide, en utilisant un appareil de type Buchner. En final, on obtient une poudre aromatique blanche. Celle-ci contient sur sec 12,6% d'isolat aromatique.

2. Raffinage de la poudre aromatique.

Selon le procédé conforme à l'invention, 60 g de poudre aromatique sont placés dans un pot en verre "twist-off" stérilisable et sont additionnés de 150 g d'eau et 50g d'éthanol. L'ensemble est agité mécaniquement pendant 10 minutes avant d'être autoclavé à 120°C pendant 5 minutes. Par centrifugation à 80°C, on sépare une phase huileuse aromatique, une phase aqueuse contenant la cyclodextrine en solution et un résidu non traité.

La phase huileuse aromatique représente 88% en poids de l'isolat initialement présent dans la poudre aromatique.

La phase aqueuse est refroidie à température ambiante de façon à recueillir sous forme solide la β-cyclodextrine.

**Revendications**

1. Procédé de raffinage de mélanges issus de traitements de milieux gras à l'aide de cyclodextrine et comprenant des complexes de cyclodextrine essentiellement avec des substances lipophiles autres que les acides gras, caractérisé en ce que successivement on soumet ledit mélange à un traitement thermique en présence d'un système solvant comprenant de l'eau, on sépare le mélange ainsi traité en différents raffinats et on récupère les raffinats.

2. Procédé selon la revendication 1, caractérisé en ce que les proportions respectives en mélange sec de départ à traiter et en système solvant varient de 0,02:1 à 4:1 parties en poids et, de préférence, de 0,10:1 à 1:1 parties en poids.

3. Procédé selon l'une des revendications 1 et 2, caractérisé en ce que l'on homogénéise par agitation le mélange avec le système solvant, ladite agitation étant mise en oeuvre avant le traitement thermique et/ou pendant celui-ci.

4. Procédé selon l'une des revendications 1 à 3, caractérisé en ce que le traitement thermique est effectué à une température comprise entre 30 et 200°C.

5. Procédé selon la revendication 4, caractérisé en ce que la durée du traitement thermique est de quelques secondes à quelques minutes, de préférence comprise entre 1 et 10 minutes et, plus préférentiellement encore, voisine de 5 minutes.

6. Procédé selon l'une quelconque des revendications 1 à 5, caractérisé en ce que, lorsque les substances incluses sont essentiellement des stéroïdes ou des composés d'arômes, la température de traitement thermique est comprise entre 100 et 150°C, de préférence entre 110 et 140°C, et plus préférentiellement encore voisine de 120°C.

7. Procédé selon l'une des revendications 1 à 6, caractérisé en ce que le traitement thermique comprend au moins deux étapes.

8. Procédé selon la revendication 7, caractérisé en ce que le traitement thermique comprend deux étapes dans la première desquelles on soumet le mélange de départ à un premier traitement thermique à une température $T_1$ comprise entre 30 et 100°C en présence du système solvant, avant de séparer du mélange de départ les composés lipophiles les plus faiblement liés à la cyclodextrine, et dans la deuxième desquelles on soumet le mélange résiduel à un second traitement thermique à une température $T_2$ comprise entre 100 et 200°C en présence du système solvant, avant de séparer les composés lipophiles restants du mélange résiduel.

9. Procédé selon la revendication 8, caractérisé en ce que, lorsque les substances incluses sont essentiellement des stéroïdes ou des composés d'arômes, la température $T_2$ du deuxième traitement thermique est comprise entre 100 et 150°C, de préférence entre 100 et 140°C et plus préférentiellement encore voisine de 120 ° C.

**10.** Procédé selon l'une des revendications 1 à 9, caractérisé en ce que tout ou partie du traitement thermique est effectué en présence d'au moins un produit propre à améliorer les propriétés décomplexantes du système solvant et/ou à faciliter la séparation des raffinats.

**11.** Procédé selon la revendication 10, caractérisé par le fait que le produit est choisi dans le groupe des sucres, des polyols ou des alcools.

**12.** Procédé selon l'une des revendications 10 et 11, caractérisé en ce que tout ou partie du traitement thermique est effectué en présence de glycérol, de xylitol ou de sorbitol, le glycérol étant préféré.

**13.** Procédé selon la revendication 12, caractérisé en ce que le rapport eau/glycérol est compris entre 3:1 et 1:2 parties en poids, de préférence voisin de 1:1 parties en poids.

**14.** Procédé selon l'une quelconque des revendications 1 à 13, caractérisé en ce qu'il est mis en oeuvre suivant un mode de fonctionnement statique.

**15.** Procédé selon la revendication 14, caractérisé en ce que l'on a recours à un dispositif du type autoclave.

**16.** Procédé selon l'une des revendications 1 à 13, caractérisé en ce qu'il est mis en oeuvre suivant un mode de fonctionnement dynamique.

**17.** Procédé selon la revendication 16, caractérisé en ce que l'on a recours à un dispositif du type échangeur thermique à plaques, à faisceau tubulaire ou à surface raclée et/ou du type "Jet-cooker" et/ou à un dispositif d'extraction par entraînement à la vapeur.

**18.** Procédé selon l'une des revendications 1 à 17, caractérisé en ce que l'on a recours à des moyens de séparation du type décanteuse ou centrifugeuse pour procéder au traitement de séparation.

**Claims**

**1.** A process of refining mixtures obtained from treatments of fatty media with cyclodextrin and containing complexes of cyclodextrin substantially with lipophilic substances other than fatty acids, characterised in that the said mixture is successively subjected to a heat treatment in the presence of a solvent system containing water, the mixture thus treated is separated into different raffinates and the raffinates are recovered.

**2.** A process according to Claim 1, characterised in that the respective proportions of dry starting mixture to be treated and solvent system vary from 0.02:1 to 4:1 parts by weight, preferably from 0.10:1 to 1:1 parts by weight.

**3.** A process according to one of the Claims 1 and 2, characterised in that the mixture is homogenized with the solvent system by stirring, the said stirring being carried out before the heat treatment and/or during the latter.

**4.** A process according to one of the Claims 1 to 3, characterised in that the heat treatment is carried out at a temperature from 30 to 200 ° C.

**5.** A process according to Claim 4, characterised in that the duration of the heat treatment is from several seconds to several minutes, preferably from 1 to 10 minutes, even more preferably in the region of 5 minutes.

**6.** A process according to any one of Claims 1 to 5, characterised in that when the included substances substantially consist of steroids or compounds of aromas, the temperature of the heat treatment is from 100 to-150 ° C, preferably from 110 to 140 ° C, more preferably in the region of 120 ° C.

7. A process according to one of the Claims 1 to 6, characterised in that the heat treatment comprises at least two stages.

8. A process according to Claim 7, characterised in that the heat treatment comprises two stages, in the first of which the starting mixture is subjected to a first heat treatment at a temperature $T_1$ of from 30 to 100°C in the presence of the solvent system before the lipophilic compounds which are most weakly linked to cyclodextrin are separated from the starting mixture, and in the second of which the residual mixture is subjected to a second heat treatment at a temperature $T_2$ of from 100 to 200°C in the presence of the solvent system before the remaining lipophilic compounds are separated from the residual mixture.

9. A process according to Claim 8, characterised in that when the included substances consist substantially of steroids or compounds of aromas, the temperature $T_2$ of the second heat treatment is from 100 to 150°C, preferably from 100 to 140°C and more preferably in the region of 120°C.

10. A process according to one of the Claims 1 to 9, characterised in that all or part of the heat treatment is carried out in the presence of at least one product capable of improving the properties of decomplexation of the solvent system and/or of facilitating the separation of the raffinates.

11. A process according to Claim 10, characterised by the fact that the product is selected from sugars, polyols or alcohols.

12. A process according to one of the Claims 10 and 11, characterised in that all or part of the heat treatment is carried out in the presence of glycerol, xylitol or sorbitol, glycerol being preferred.

13. A process according to Claim 12, characterised in that the water/glycerol ratio is from 3:1 to 1:2 parts by weight, preferably in the region of 1:1 parts by weight.

14. A process according to any one of Claims 1 to 13, characterised in that it is carried out by a static mode of operation.

15. A process according to Claim 14, characterised in that it employs an apparatus of the autoclave type.

16. A process according to any one of Claims 1 to 13, characterised in that it is carried out by a dynamic mode of operation.

17. A process according to Claim 16, characterised in that it employs an apparatus of the heat exchanger type with plates, nests of tubes or a roughened surface and/or of the "Jet-cooker" type and/or an apparatus for extraction by steam distillation.

18. A process according to one of the Claims 1 to 15, characterised in that it employs separating means of the decanting or centrifuging type for carrying out the treatment of separation.

**Patentansprüche**

1. Verfahren zur Raffinierung von Gemischen, die aus Behandlungen von fetthaltigen Medien mit Cyclodextrin hervorgegangen sind und Komplexe aus Cyclodextrin im wesentlichen mit lipophilen Substanzen außer Fettsäuren umfassen, dadurch **gekennzeichnet,** daß man stufenweise das Gemisch einer thermischen Behandlung in Gegenwart eines Lösungsmittelsystems, umfassend Wasser, unterwirft, das so behandelte Gemisch in verschiedene Raffinate trennt und die Raffinate gewinnt.

2. Verfahren nach Anspruch 1, dadurch **gekennzeichnet,** daß die jeweiligen Verhältnisse in dem zu behandelnden trockenen Ausgangsgemisch und in dem Lösungsmittelsystem von 0,02:1 bis 4:1 Gew.-Teilen und bevorzugt von 0,10:1 bis 1:1 Gew.-Teilen variieren.

3. Verfahren nach einem der Ansprüche 1 und 2, dadurch **gekennzeichnet,** daß man das Gemisch durch Rühren mit dem Lösungsmittelsystem homogenisiert, wobei das Rühren vor der thermischen Behandlung und/oder während dieser durchgeführt wird.

4. Verfahren nach einem der Ansprüche 1 bis 3, dadurch **gekennzeichnet,** daß die thermische Behandlung bei einer Temperatur zwischen 30 und 200°C durchgeführt wird.

5. Verfahren nach Anspruch 4, dadurch **gekennzeichnet,** daß die Dauer der thermischen Behandlung einige Sekunden bis einige Minuten, bevorzugt zwischen 1 und 10 Minuten und noch bevorzugter etwa 5 Minuten beträgt.

6. Verfahren nach einem der Ansprüche 1 bis 5, dadurch **gekennzeichnet,** daß, wenn die eingeschlossenen Substanzen im wesentlichen Steroide oder aromagebende Verbindungen sind, die Temperatur der thermischen Behandlung zwischen 100 und 150°C, bevorzugt zwischen 110 und 140°C und noch bevorzugter in der Nähe von 120°C liegt.

7. Verfahren nach einem der Ansprüche 1 bis 6, dadurch **gekennzeichnet,** daß die thermische Behandlung mindestens 2 Stufen umfaßt.

8. Verfahren nach Anspruch 7, dadurch **gekennzeichnet,** daß die thermische Behandlung zwei Stufen umfaßt, wobei man in der ersten Stufe davon das Ausgangsgemisch einer ersten thermischen Behandlung bei einer Temperatur $T_1$ zwischen 30 und 100°C in Gegenwart des Lösungsmittelsystems unterwirft, bevor man die lipophilen schwächer an das Cyclodextrin gebundenen Verbindungen von dem Ausgangsgemisch trennt, und daß man in der zweiten Stufe davon das Restgemisch einer zweiten thermischen Behandlung bei einer Temperatur $T_2$ zwischen 100 und 200°C in Gegenwart eines Lösungsmittelsystems unterwirft und dann die verbleibenden lipophilen Verbindungen des Restgemisches trennt.

9. Verfahren nach Anspruch 8, dadurch **gekennzeichnet,** daß, wenn die eingeschlossenen Substanzen im wesentlichen Steroide oder aromagebende Verbindungen sind, die Temperatur $T_2$ der zweiten thermischen Behandlung zwischen 100 und 150°C, bevorzugt zwischen 100 und 140°C und noch bevorzugter bei 120°C liegt.

10. Verfahren nach einem der Ansprüche 1 bis 9, dadurch **gekennzeichnet,** daß die ganze thermische Behandlung oder ein Teil davon in Gegenwart von mindestens einem Produkt durchgeführt wird, das die dekomplexierenden Eigenschaften des Lösungsmittelsystems verbessern kann und/oder die Trennung der Raffinate erleichtern kann.

11. Verfahren nach Anspruch 10, dadurch **gekennzeichnet,** daß das Produkt aus der Gruppe Zucker, Polyole oder Alkohole ausgewählt wird.

12. Verfahren nach einem der Ansprüche 10 und 11, dadurch **gekennzeichnet,** daß die ganze thermische Behandlung oder ein Teil davon in Gegenwart von Glycerin, Xylit oder Sorbit durchgeführt wird, wobei Glycerin bevorzugt ist.

13. Verfahren nach Anspruch 12, dadurch **gekennzeichnet,** daß das Verhältnis Wasser/Glycerin zwischen 3:1 und 1:2 Gew.-Teilen, bevorzugt bei 1:1 Gew.-Teilen, liegt.

14. Verfahren nach einem der Ansprüche 1 bis 13, dadurch **gekennzeichnet,** daß es nach einer statischen Ausführungsform durchgeführt wird.

15. Verfahren nach Anspruch 14, dadurch **gekennzeichnet,** daß man eine Vorrichtung vom Typ eines Autoklaven verwendet.

16. Verfahren nach einem Ansprüche 1 bis 13, dadurch **gekennzeichnet,** daß es nach einer dynamischen Ausführungsform durchgeführt wird.

17. Verfahren nach Anspruch 16, dadurch **gekennzeichnet,** daß man eine Vorrichtung vom Typ thermischer Plattenaustauscher, Röhrenbündel oder einer aufgerauhten Oberfläche und/oder vom Typ "Jet-cooker" und/oder eine Extraktionsvorrichtung unter Einsatz von Dampf verwendet.

**18.** Verfahren nach einem der Ansprüche 1 bis 17, dadurch **gekennzeichnet,** daß man Trennmittel vom Typ Dekanter oder Zentrifuge verwendet, um die Trennbehandlung durchzuführen.